# EUROPÄISCHE PATENTSCHRIFT

(11) **EP 1 696 165 B1**
(45) Veröffentlichungstag und Bekanntmachung des Hinweises auf die Patenterteilung: **17.03.2010**
(21) Anmeldenummer: 06003015.2
(22) Anmeldetag: 15.02.2006
(51) Int. Cl.: F16L 25/00

(54) **Steckverbindung mit Anschlussstutzen und Leitung**
Connector with fitting and pipe
Raccord avec embout et tuyau

(30) Priorität: 24.02.2005 AT 3072005
(43) Veröffentlichungstag der Anmeldung: 30.08.2006
(73) Patentinhaber: Gealan Formteile GmbH, 95145 Oberkotzau (DE); Vaillant GmbH, 42859 Remscheid (DE)
(72) Erfinder: Braun, Thomas, 95234 Sparneck (DE); Saunus, Christian, 08223 Grünbach (DE)
(74) Vertreter: Hocker, Thomas

(56) Entgegenhaltungen:
- EP-A- 1 333 214
- DE-U1- 20 104 406
- FR-A- 2 528 533
- FR-A- 2 655 126
- GB-A- 2 107 814

## Beschreibung

Die Erfindung betrifft eine Steckverbindung mit Anschlussstutzen und Leitung.

Beim Betrieb von Brennwertgeräten entsteht bei der Abkühlung von Wasserdampf Kondensat. Dieses wird unterhalb des Wärmetauschers aufgefangen und muss über eine Kondensatleitung abgeführt werden. Gleichzeitig muss ein Abgasaustritt aus der Kondensatleitung verhindert werden. Daher kommen Siphons zum Einsatz, in denen Kondensat den Abgasaustritt verhindert.

Gemäß dem Stand der Technik wird ein Siphon mit dem Wärmetauscher über ein Rohr verbunden, das mittels einer Überwurfmutter oder Schelle verschraubt wird. Die bekannten Vorrichtungen weisen Nachteile hinsichtlich der Vielzahl der eingesetzten Bauteile auf. Zu den hohen Materialkosten treten Arbeitskosten für den erhöhten Montageaufwand hinzu.

Aus der FR 2 528 533 ist einen Anschlussstutzen mit Leitung bekannt, bei dem beide Teile über ein spiralförmiges Gewinde verfügen, wodurch der Anschlussstutzen mit der Leitung verschraubt wird. Das Profil des Aufnahmestutzens steigt von der Öffnungsseite zum Inneren an, um dann auf einem bestimmten Höhenniveaus zu verbleiben und dann senkrecht abzufallen. Die Demontage erfolgt durch Schrauben.

FR 2 655 126 zeigt ein ringförmiges, alternierendes Profil, bei dem durch den gleichen Flankenanstieg auf beiden Seiten das Montieren und Demontieren gleiche Kräfte erfordert. Somit ist die Gefahr des Ablösens gegeben. Ein weiteres aus dieser Schrift bekanntes Profil kann nur zerstörend gelöst werden.

DE 201 04 406 U1 zeigt ein ringförmiges, alternierendes Profil. Das Profil des Aufnahmestutzens steigt von der Öffnungsseite zum Inneren an, um dann auf einem bestimmten Höhenniveaus zu verbleiben und dann senkrecht abzufallen. Somit kann die Verbindung nur mittels Zerstörung gelöst werden.

DE 202 19 220 U1 zeigt ein Außenprofil, wobei die Sägezahnflanken von der Öffnungsseite zum Inneren im Winkel von ca. 45° ansteigen, gefolgt von einem senkrechten Abfall mit anschließendem waagrechten Bereich.

Aus der nachveröffentlichten WO 2005/057072 A1 ist ein Fluidkanal mit einem Sägezahnaußenprofil, wobei dieses über relativ flach ansteigende Aufgleitflächen, die sich mit Rückhalteflächen rechtwinklig zur Längsrichtung der Vorrichtung abwechseln, bekannt.

EP-A-1333214 offenbart eine Steckverbindung mit den Merkmalen des Oberbegriffs des Anspruchs 1.

Aufgabe der vorliegenden Erfindung ist es, eine Steckverbindung zu schaffen, die zuverlässig dichtet, kostengünstig ist und sich durch eine einfache Bauweise auszeichnet.

Erfindungsgemäß wird obige Aufgabe durch die Merkmale des kennzeichnenden Teils des Anspruchs 1 gelöst. Eine sichere Abdichtung und eine stabile Verbindung werden durch ein Verhaken des Leitungsprofils am Profil des Anschlussstutzens gewährleistet. Hierbei kann optional eine leichte elastische Beanspruchung die dichte Verbindung begünstigen.

Weitere vorteilhafte Ausgestaltungen ergeben sich aus den Unteransprüchen.

Gemäß Anspruch 2 gewährleisten die steilen Flanken eines Rechteck- oder Wellenprofils eine stabile Verrastung und eine zuverlässige Abdichtung.

Gemäß den Merkmalen des Anspruches 3 ermöglicht die Elastizität mindestens einer der an der Steckverbindung beteiligten Komponenten das Führen der Leitung in oder über den Anschlussstutzen.

Gemäß den Merkmalen des Anspruches 4 bewirkt ein sich ändernder Durchmesser des Anschlussstutzens, aufgrund des stärkeren Ineinandergreifens von Sägezahn und Rechteckflanke, eine hohe Stabilität der Steckverbindung sowie ein zuverlässiges Abdichten.

Gemäß den Merkmalen des Anspruches 5 kann die in Anspruch 4 genannte Stabilität der Steckverbindung und die Zuverlässigkeit der Abdichtung auch durch die Änderungen des Leitungsdurchmessers gewährleistet werden.

Eine Ausführung nach Anspruch 6 verhindert ein Anstauen von Flüssigkeiten in den Vertiefungen des Leitungsprofils.

Gemäß Anspruch 7 wird die Dichtwirkung durch ein elastomeres Element unterstützt.

Anspruch 8 sieht den Einsatz der Erfindung in einem Heizgerät mit Siphon vor.

In der Zeichnung zeigen:
Fig. 1 eine schematische Anordnung einer Steckverbindung zwischen Abgas- und Kondensatsammler sowie dem Siphon eines Heizgerätes
Fig. 2 einen Querschnitt durch einen Siphon mit Anschlussstutzen
Fig. 3 eine erfindungsgemäße Lösung des Dichtheitsproblems an der Verbindungsstelle von Leitung und Siphonanschluss im Querschnitt

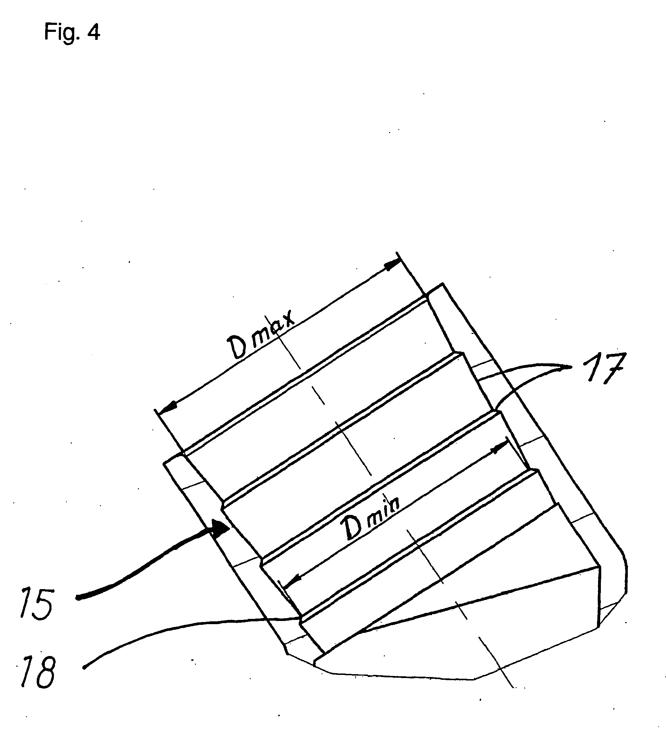

Fig. 4 den Siphonanschluss alleine

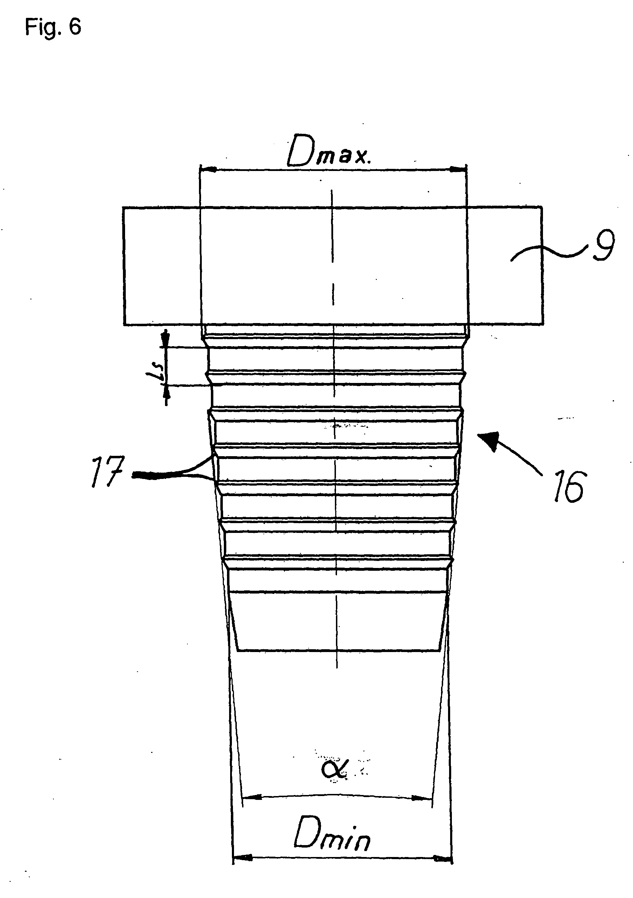

Fig. 5 und 6 eine alternative Lösung des Dichtheitsproblems an einer Verbindungsstelle im Querschnitt, welche nicht under Schutz des Patentes fällt.

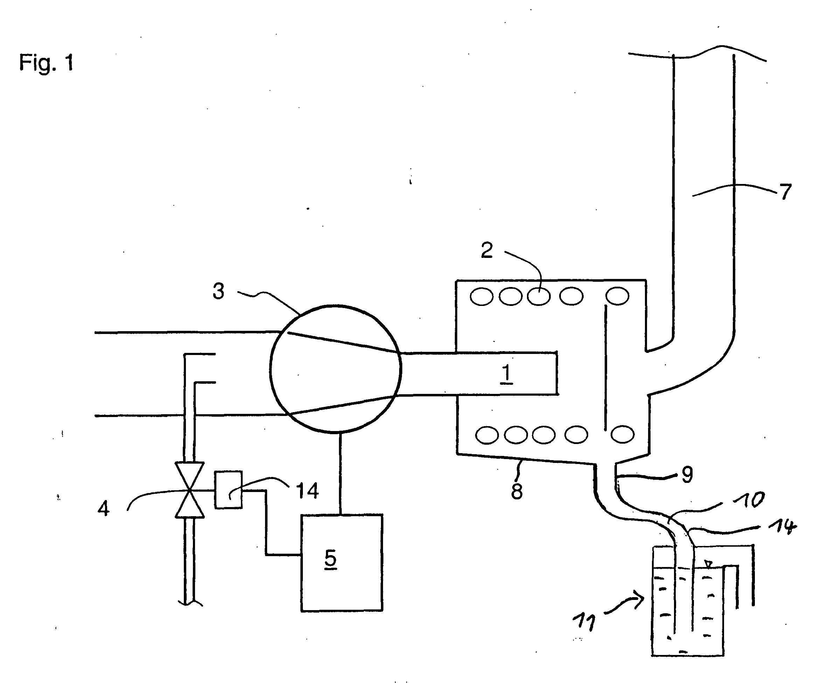

Figur 1 zeigt ein Heizgerät mit einem Brenner 1, der über eine Gasarmatur 4 und ein Gebläse 3 mit einem Gas-Luft-Gemisch versorgt wird. Gasarmatur 4 und Gebläse 3 werden über eine Regelung 5 geregelt. Der Brenner 1 befindet sich zentrisch innerhalb des Wärmetauschers 2. Die sich im Wärmetauscher 2 bildenden Abgase und Kondensate werden über den Abgasaustritt 7 bzw. über den Kondensatanschluss 9 abgeführt. Mit dem Kondensatanschluss 9 ist eine Leitung 10 verbunden, über die das Kondensat in einen Siphon 11 abgeleitet wird. Zur Förderung der Kondensatableitung, muss der Anschlussstutzen 14 unterhalb des Kondensatanschlusses 9 platziert werden. Auf diese Weise kann allein über die Schwerkraft das Kondensat 12 zum Siphon 11 geleitet werden.

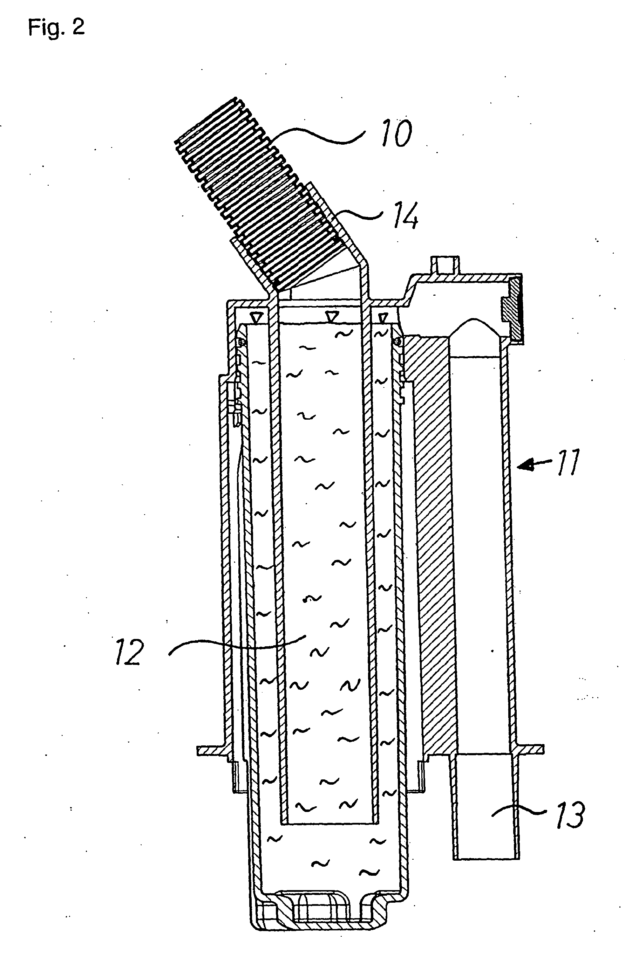

Figur 2 zeigt einen Querschnitt durch den Siphon 11 und Anschlussstutzen 14, wobei die Leitung 10 im Anschlussstutzen 14 verrastet ist. Das aus der Leitung 10 tretende Kondensat 12 wird im Siphon 11 aufgefangen und verhindert gleichzeitig ein Entweichen von Abgasen über die Kondensatableitung 13.

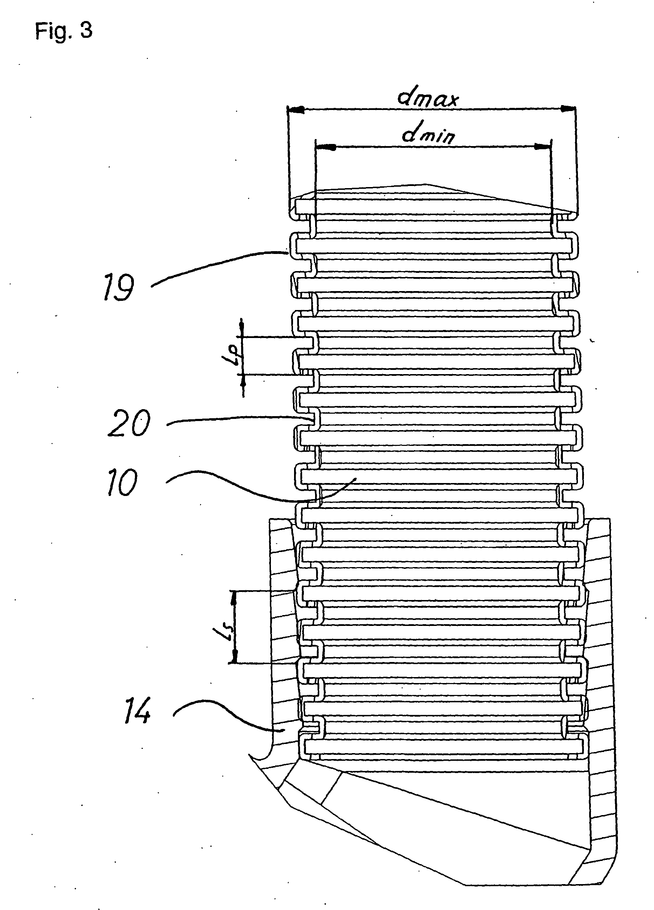

Figur 3 verdeutlicht das Prinzip der Verrastung und Abdichtung der Steckverbindung im Bereich des Siphonanschlusses 14. Das Innere des Siphonanschlusses 14 weist im Querschnitt ein Sägezahninnenprofil 15 auf. Die Sägezahnflanken 17 steigen dabei von der Öffnungsseite zum Inneren des Anschlussstutzens 14 flach an und fallen dann wieder steil ab. Dabei ist der minimale Innendurchmesser Dₘᵢₙ des Sägezahnprofils an mindestens einer Sägezahnspitze 18 kleiner als der maximale Außendurchmesser dₘₐₓ der Leitung 10. Das alternierende Profil der Leitung 10 sollte dabei vorzugsweise ringförmig ausgebildet sein und ein Rechteckprofil mit steil auf- und absteigenden Flanken haben. Die Erhebungen 19 bzw. Vertiefungen 20 wiederholen sich dabei in periodischen Abständen.

Bei der Verbindung der Leitung 10 mit dem Anschlussstutzen 14 wird die Leitung 10 durch Ausüben einer Kraft in den Anschlussstutzen 14 hineingedrückt. Durch die Kraft wird die Leitung 10 längs ihrer Erstreckungslinie gestaucht. Zusätzlich erfolgen beim Einführen eine radiale Dehnung des Anschlussstutzens 14 und/oder eine radiale Stauchung der Leitung 10. Diese Elastizität mindestens einer der beiden Komponenten ermöglicht das Einführen der Leitung 10 in den Anschlussstutzen 14. Nachdem die Leitung 10 in den Anschlussstutzen 14 gesteckt worden ist, entspannt sich die Leitung 10 wieder. Dies hat zur Folge, dass sich die Erhebungen 19 der Leitung 10 an den Sägezahnflanken 17 des Anschlussstutzens 14 verhaken und folglich gegen Flüssigkeits- und/oder Gasaustritte abdichten. Der Abstand Iₛ zweier Sägezahnspitzen 18 entspricht dabei vorzugsweise einem geradzahligen Vielfachen des periodischen Abstands Iₚ vom Leitungsprofil. Dies kann beispielsweise der Abstand zwischen zwei Erhebungen 19 bzw. Vertiefungen 20 des Leitungsprofils sein. Die Wahl dieser Abstände führt dazu, dass eine Restspannung zwischen den Erhebungen 19 auch nach dem Entspannen der Leitung 10 im Steckbereich bestehen bleibt. Für die Verrastung sind demzufolge die Stellen verantwortlich, an denen sich die Erhebungen 19 an den steil abfallenden Flanken des Sägezahninnenprofils 15 verhaken. Ein sicheres Abdichten gegen Flüssigkeits- und/oder Gasaustritte erfolgt ebenfalls im Bereich der steilen Sägezahnflanken, hauptsächlich aber an den Stellen, an denen die Erhebungen 19 an die flachen Flanken des Sägezahninnenprofils 15 durch die Restspannung gedrückt werden. Ein ungewolltes Herausrutschen der Leitung 10, selbst bei Einwirkung von Drücken, wird somit vermieden.

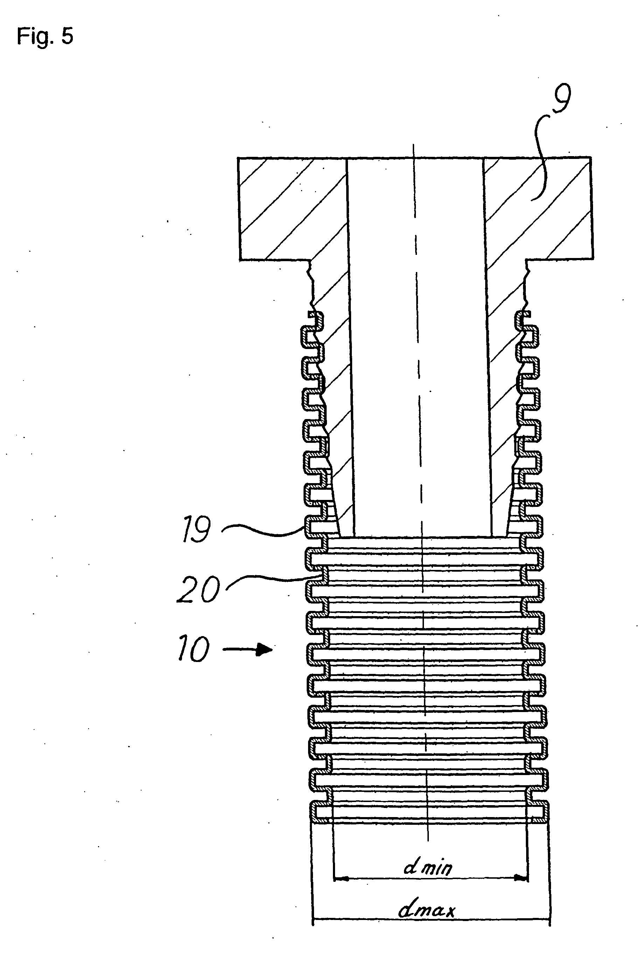

Figur 5 veranschaulicht die Steckverbindung, bei der die Leitung 10 über den Anschlussstutzen (9, 14) gesteckt wird. Die Steckverbindung ist invers zum vorigen Ausführungsbeispiel aufgebaut. Das zugrunde liegende Prinzip ist jedoch identisch mit dem des anhand Figur 3 erläuterten. Der wesentliche Unterschied ist der, dass hier die Leitung 10 über und nicht in den Anschlussstutzen bzw. Kondensatanschluss 9 gesteckt wird. Anders als in Figur 3 ist es zweckmäßig, das Äußere des Kondensatanschlusses 9 mit einem Sägezahnprofil zu versehen, wobei die Sägezahnflanken 17 von der Öffnung zum Inneren flach ansteigen und dann wieder steil abfallen. Der maximale Außendurchmesser Dₘₐₓ des Kondensatanschlusses 9 ist dabei an mindestens einer Sägezahnspitze 18 größer als der minimale Innendurchmesser dₘᵢₙ der Leitung 10. Die Verrastung und das Abdichten erfolgen, analog der Steckverbindung gemäß Figur 3, an den steilen bzw. flachen Sägezahnflanken 17. Auch übernehmen die Abdichtung bzw. Verrastung nicht mehr die Erhebungen 19, sondern die Vertiefungen 20 des periodischen Leitungsprofils, die vorzugsweise rechteckförmig ausgebildet sein sollten.

Wie den obigen Ausführungen zu entnehmen ist, ist es sinnvoll, an den Stellen, an denen Flüssigkeit in die Leitung 10 geführt wird eine Verbindung gemäß Figur 5 und bei Wasseraustritten aus der Leitung 10 eine Steckverbindung entsprechend Figur 3 zu wählen. Natürlich kann dabei an die Stelle des Siphon- 14 oder Kondensatanschlusses 9 auch jeder denkbare Anschlussstutzen mit den oben erwähnten Merkmalen treten. Das Prinzip der Steckverbindung ist nach wie vor dasselbe. Die Steckverbindung kann mit oder ohne Zuhilfenahme einer Vorrichtung manuell bewerkstelligt werden. Ein Lösen der Steckverbindung kann schließlich mittels kräftiges Ziehen an der Leitung 10, durch dessen Entfernung vom Anschlussstutzen (9, 14), erfolgen.

Im Bereich zwischen den beiden Steckverbindungen am Abgas- und Kondensatsammler 8 sowie am Siphon 11 kann von einem alternierenden Profil abgesehen werden, so dass Kondensflüssigkeit 12 möglichst gut in den Siphon 11 abfließen kann, ohne sich in den Vertiefungen 20 der Leitung 10 anzustauen. Auf diese Weise kann der Bildung von Ablagerungen in der Leitung 10 entgegengewirkt werden.

Möglich ist auch die Wahl eines aperiodischen Leitungsprofils, was allerdings eine entsprechend speziellere Ausgestaltung des Anschlussstutzens 14 bzw. Kondensatanschlusses 9 erforderlich macht.

Der minimale Innendurchmesser Dₘᵢₙ des Anschlussstutzens 14 an den Sägezahnspitzen 18 sollte sich von der Öffnung zum Inneren hin, vorzugsweise um gleiche Werte, verkleinern. Diese Verengung führt zu einer besseren Verrastung und Abdichtung, da die tiefer eingedrungenen Erhebungen 19 der Leitung 10 eine größere Kontaktfläche mit den steil abfallenden Sägezahnflanken haben. Denselben Effekt erhält man, wenn man eine Leitung 10 verwendet, dessen maximaler Außendurchmesser dₘₐₓ sich im Steckbereich vom Inneren zur Öffnung hin, vorzugsweise um gleiche Beträge, vergrößert. Auch ist die Kombination eines sich im Innendurchmesser verkleinernden Anschlussstutzens 14 mit einer sich im Außendurchmesser vergrößernden Leitung 10 durchaus praktikabel.

Die obige Ausführung kann in analoger Weise für die Steckverbindung gemäß Figur 3 und 5 Anwendung finden. Der maximale Außendurchmesser Dₘₐₓ an den Sägezahnspitzen 18 vergrößert sich dann von der Öffnung zum Inneren hin vorzugsweise um gleiche Werte. Auch kann eine Leitung 10 herangezogen werden, dessen minimaler Innendurchmesser dₘᵢₙ sich im Steckbereich vom Inneren zur Öffnung hin, vorzugsweise um gleiche Beträge, verkleinert. Eine Kombination eines sich im Außendurchmesser vergrößernden Kondensatanschlusses 9 mit einer sich im Innendurchmesser verkleinernden Leitung 10 ist ebenfalls praktikabel.

Eine Verbesserung der Dichtheit kann durch die Beschichtung der Leitung 10 und/oder des Anschlussstutzens 14 bzw. Kondensatanschlusses 9 mit einem elastomeren Material im Bereich der Verrastung bewerkstelligt werden. Das elastomere Material, das beispielsweise im Zwei-Komponenten-Spritzgussverfahren auf die äußere bzw. innere Oberfläche der Leitung 10 und/oder des Anschlussstutzens 14 aufgetragen wird, dichtet durch seine elastische Beschaffenheit besser ab und erhöht die Haftreibung an den Kontaktstellen zwischen Leitung 10 und Anschlussstutzen 14. Folglich wird einem Lösen der Steckverbindung auch bei größeren Drücken entgegenwirkt.

## Patentansprüche

1. Steckverbindung mit Anschlussstutzen (9, 14) und Leitung (10), wobei der Anschlussstutzen (9, 14) ein in Aufnahmerichtung weisendes, ringförmiges, alternierendes Sägezahninnenprofil (15) hat, wobei die Sägezahnflanken (17) von der Öffnungsseite zum Inneren flach ansteigen, gefolgt von einem steilen Abfall, die Leitung (10) ein ringförmiges, periodisch alternierendes Profil mit im Wesentlichen konstanter Wandstärke aufweist, **dadurch** in Längsrichtung stauchbar ist und wobei der minimale Durchmesser (Dₘᵢₙ) an den Sägezahnspitzen (18) des Sägezahnprofils an mindestens einer Stelle kleiner als der maximale Außendurchmesser (dₘₐₓ) des Leitungsprofils ist, wodurch die Leitung (10) an den Sägezahnflanken (17) des Anschlussstutzens (14) verhakt und folglich gegen Flüssigkeits- und/oder Gasaustritte abdichtet, **dadurch gekennzeichnet, dass** der Abstand (Iₛ) zwischen zwei Sägezahnspitzen (18) etwas kleiner als ein geradzahiges Vielfaches eines periodischen Leitungsprofils (Iₚ) im ungestauchten Zustand ist.

2. Steckverbindung mit Anschlussstutzen (9, 14) und Leitung (10) nach Anspruch 1, **dadurch gekennzeichnet, dass** das alternierende periodische Leitungsprofil ein Rechteck- oder Wellenprofil ist.

3. Steckverbindung mit Anschlussstutzen (9, 14) und Leitung (10) nach einem der Ansprüche 1 oder 2, **dadurch gekennzeichnet, dass** der Anschlussstutzen (9, 14) und/oder die Leitung (10) elastisch sind.

4. Steckverbindung mit Anschlussstutzen (9, 14) und Leitung (10) nach einem der Ansprüche 1 bis 3, **dadurch gekennzeichnet, dass** der minimale Innen- (Dₘᵢₙ) bzw. maximale Außendurchmesser (Dₘₐₓ) an den Sägezahnspitzen (18) sich von der Öffnung zum Inneren hin, vorzugsweise um gleiche Beträge, verkleinert bzw. vergrößert.

5. Steckverbindung mit Anschlussstutzen (9, 14) und Leitung (10) nach einem der Ansprüche 1 bis 4, **dadurch gekennzeichnet, dass** der maximale Außen- (dₘₐₓ) bzw. minimale innendurchmesser (dₘᵢₙ) der Leitung (10) sich insbesondere im Steckbereich vom Inneren zur Öffnung hin, vorzugsweise um gleiche Beträge, vergrößert bzw. verkleinert.

6. Steckverbindung mit Anschlussstutzen (9, 14) und Leitung (10) nach einem der Ansprüche 1 bis 5, **dadurch gekennzeichnet, dass** die Leitung (10) zwischen den Steckbereichen kein alternierendes Profil aufweist.

7. Steckverbindung mit Anschlussstutzen (9, 14) und Leitung (10) nach einem der Ansprüche 1 bis 6, **dadurch gekennzeichnet, dass** zwischen Anschlussstutzen (9, 14) und Leitung (10) sich eine elastomere Schicht, welche fest mit dem Anschlussstutzen (9, 14) und/oder der Leitung (10) verbunden ist, befindet.

8. Heizgerät mit einem Siphon, welcher eine Steckverbindung gemäß einem der Ansprüche 1 bis 7 enthält.

## Claims

1. A connector with a fitting (9, 14) and a pipe (10), with the fitting (9, 14) being provided with an annular, alternating saw tooth profile (15) pointing in the locating direction, with the saw tooth flanks (17) slightly rising from the opening side towards the interior, followed by a steep descent, the pipe (10) having an annular, periodically alternating profile with an essentially constant wall thickness, thus being upsettable in a longitudinal direction, and with the minimum diameter (Dₘᵢₙ) at the saw tooth points (18) of the saw tooth profile being at at least one point smaller than the maximum outside diameter (dₘₐₓ) of the pipe profile, so that the pipe (10) interlocks at the saw tooth flanks (17) of the fitting (14) and thus provides a liquid and/or gas tight seal, **characterised in that** the distance (Iₛ) between two saw tooth points (18) is slightly smaller than an even numbered multiple of a periodic pipe profile (Iₚ) in the non-upset condition.

2. A connector with a fitting (9, 14) and a pipe (10) as claimed in Claim 1 **characterised in that** the alternative periodic pipe profile is a rectangular or wave profile.

3. A connector with a fitting (9, 14) and a pipe (10) as claimed in any of the Claims 1 or 2 **characterised in that** that the fitting (9, 14) and/or the pipe (10) are flexible.

4. A connector with a fitting (9, 14) and a pipe (10) as claimed in any of the Claims 1 to 3 **characterised in that** the minimum inside diameter (Dₘᵢₙ) and maximum outside diameter (Dₘₐₓ), respectively, at the saw tooth points (18) decreases and increases, respectively, from the opening toward the interior, preferably by identical amounts.

5. A connector with a fitting (9, 14) and a pipe (10) as claimed in any of the Claims 1 to 4 **characterised in that** hat the maximum outside diameter (dₘₐₓ) and minimum inside diameter (dₘᵢₙ), respectively, of the pipe (10), especially in the connection range, increases and decreases, respectively, from the interior toward the opening, preferably by identical amounts.

6. A connector with a fitting (9, 14) and a pipe (10) as claimed in any of the Claims 1 to 5 **characterised in that** that the pipe (10) is not provided with an alternating profile between the connection ranges.

7. A connector with a fitting (9, 14) and a pipe (10) as claimed in any of the Claims 1 to 6 **characterised in that** that provision is made for an elastomer layer between the fitting (9, 14) and pipe (10), which is firmly bonded with the fitting (9, 14) and/or the pipe (10).

8. A heater with a siphon comprising a connector in accordance with any of the Claims 1 to 7.

## Revendications

1. Connecteur avec raccord (9, 14) et conduite (10), le raccord (9, 14) ayant un profil interne en dents de scie annulaire en alternance (15) tourné dans la direction de réception, les flancs des dents de scie (17) montant de manière plate du côté d'ouverture vers l'intérieur, suivi d'une chute raide, la conduite (10) présentant un profil annulaire en alternance périodique avec une épaisseur de paroi essentiellement constante, pouvant par conséquent être comprimée dans la direction longitudinale, et le diamètre minimal (Dₘᵢₙ) au niveau des pointes des dents de scie (18) du profil en dents de scie étant inférieur en au moins un point au diamètre externe maximal (dₘₐₓ) du profil de la conduite, moyennant quoi la conduite (10) s'accroche aux flancs des dents de scie (17) du raccord (14) et étanchéifie par conséquent contre les sorties de liquide et/ou de gaz, **caractérisé en ce que** la distance (Iₛ) entre deux pointes de dents de scie (18) est un peu plus petite qu'un multiple pair d'un profil périodique de la conduite (Iₚ) à l'état non comprimé.

2. Connecteur avec raccord (9, 14) et conduite (10) selon la revendication 1, **caractérisé en ce que** le profil périodique en alternance de la conduite est un profil rectangulaire ou ondulé.

3. Connecteur avec raccord (9, 14) et conduite (10) selon l'une quelconque des revendications 1 ou 2, **caractérisé en ce que** le raccord (9, 14) et/ou la conduite (10) sont élastiques.

4. Connecteur avec raccord (9, 14) et conduite (10) selon l'une quelconque des revendications 1 à 3, **caractérisé en ce que** le diamètre interne minimal (Dₘᵢₙ) ou externe maximal (Dₘₐₓ) au niveau des pointes des dents de scie (18) diminue ou s'agrandit de l'ouverture vers l'intérieur, de préférence d'ampleurs identiques.

5. Connecteur avec raccord (9, 14) et conduite (10) selon l'une quelconque des revendications 1 à 4, **caractérisé en ce que** le diamètre externe maximal (dₘₐₓ) ou interne minimal (dₘᵢₙ) de la conduite (10) s'agrandit ou diminue notamment dans la zone d'insertion de l'intérieur vers l'ouverture, de préférence d'ampleurs identiques.

6. Connecteur avec raccord (9, 14) et conduite (10) selon l'une quelconque des revendications 1 à 5, **caractérisé en ce que** la conduite (10) ne présente pas de profil en alternance entre les zones d'insertion.

7. Connecteur avec raccord (9, 14) et conduite (10) selon l'une quelconque des revendications 1 à 6, **caractérisé en ce qu'**une couche élastomère qui est reliée solidement au raccord (9, 14) et/ou à la conduite (10), se trouve entre raccord (9, 14) et conduite (10).

8. Chauffage avec siphon qui contient un connecteur selon l'une quelconque des revendications 1 à 7.
